# EUROPÄISCHE PATENTSCHRIFT

(11) **EP 0 299 922 B1**
(45) Veröffentlichungstag und Bekanntmachung des Hinweises auf die Patenterteilung: **09.03.1994**
(21) Anmeldenummer: 88810465.0
(22) Anmeldetag: 07.07.1988
(51) Int. Cl.: C07F 9/11, C07F 9/40

(54) **Verfahren zur Herstellung von Metallsalzen von Phosphor- und Phosphonsäureestern**
Process for preparing metal salts of phosphoric and phosphonic acid esters
Procédé de préparation de sels métalliques d'esters d'acides phosphoriques et phosphoniques

(30) Priorität: 13.07.1987 CH 2657/87; 19.02.1988 CH 634/88
(43) Veröffentlichungstag der Anmeldung: 18.01.1989
(73) Patentinhaber: CIBA-GEIGY AG, 4002 Basel (CH)
(72) Erfinder: Weis, Claus D., Dr., CH-4148 Pfeffingen (CH); Sutter, Peter, CH-4132 Muttenz (CH)

(56) Entgegenhaltungen:
- BULLETIN DE LA SOCIETE CHIMIQUE DE FRANCE, September-Oktober 1975, Seiten 2083-2088; N.T. THUONG et al.: "Nouveau réactif de phosphorylation réagissant par pseudo-rotation "
- JOURNAL OF GENERAL CHEMISTRY OF THE USSR, Band 50, Nr. 1, Januar 1980, Seiten 31-34, Plenum Publishing Corp.; L.V. NESTEROV et al.: "Reactions in trimethyl phosphite - sodium ion - organic base ternary systems"

## Beschreibung

Die vorliegende Erfindung betrifft ein neues Verfahren zur Herstellung von Metallsalzen von Phosphor- und Phosphonsäureestern.

Die Herstellung des Natriumsalzes des Methan-phosphonsäure-monomethylesters durch partielle alkalische Hydrolyse des Methan-phosphonsäure-dimethylesters in Wasser oder in einem Dioxan-Wasser-Gemisch mittels Natronlauge ist aus H. Cristol, M. Levy und C. Marty, J. Organometallic Chem. 12, 459 (1968) bekannt.

In der europäischen Patentanmeldung Nr. 0 245 207 ist die Herstellung von Metallsalzen des Methan-phosphonsäure-monomethylesters durch Umsetzung des Methan-phosphonsäure-dimethylesters (DMMP) mit den entsprechenden Metallhalogeniden beschrieben. Durch dieses Verfahren ist die Herstellung der Alkalisalze nicht möglich, weil die Alkalihalogenide, z.B. das Lithium-, Natrium- oder Kaliumchlorid oder auch die entsprechenden Bromide mit DMMP nicht reagieren.

Aus M. Bräuninger, W. Schwarz, A. Schmidt, Zeitschrift für Naturforschung B, 34B, 1703 (1979) ist die Herstellung der Alkalimetallsalze aus Phosphorsäureesterchlorid und Kaliumhydroxyd bekannt, während in der DE-A-21 60 730 die Umsetzung von Diphosphorpentoxid mit Methanol und nachfolgender Behandlung des Reaktionsproduktes mit Kaliumsalzen beschrieben wird.

In der US-A-3,O64,031 wird die Herstellunq von Alkalimetallsalzen von Monalkylphosphiten beschrieben. Bei der Reaktion von etwa 1 Mol eines Alkalimetallsalzes mit etwa 2 Mol eines Dialkylphosphits entstehen 1 Mol Dialkylphosphonat und 1 Mol eines Alkalimetallmonoalkylphosphits.

Im Journal of General Chemistry of the USSR, 50(1), 31-34 (1980) wird die Umsetzung von DMMP mit Natriumjodid beschrieben, wobei das Natriumsalz von Dimethylphosphonat entsteht.

Es wurde nun ein Verfahren gefunden, welches erlaubt ein- bis dreiwertige Metallsalze von Phosphonsäureestern in einfacher Weise herzustellen.

Das erfindungsgemässe Verfahren zur Herstellung von Metallsalzen von Phosphor- und Phosphonsäureestern der Formel 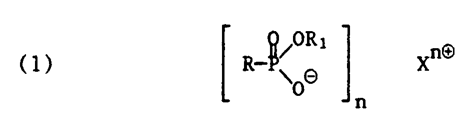
worin
- R: C₁-C₄-Alkoxy oder geradkettiges oder verzweigtes unsubstituiertes C₁-C₂₀-Alkyl oder C₂-C₆-Alkenyl,
- R₁: Wasserstoff oder C₁-C₄-Alkyl,
- X: ein Metallkation und
- n: eine der Wertigkeit von X entsprechende ganze Zahl von 1 bis 3
bedeuten, ist dadurch gekennzeichnet, dass man n Mole einer Phosphor- oder Phosphonsäure oder eines Esters davon der Formel 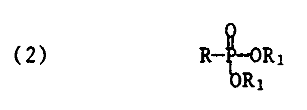
worin R, R₁ und n die oben angegebene Bedeutung haben, mit einem Mol eines Metalles Xⁿ gegebenenfalls unter Kühlung umsetzt.

Die Umsetzung mit dem Metall erfolgt bei einer Temperatur zwischen 20 und 200°C, vorzugsweise 25 und 180°C.

Als Metalle kommen solche der Gruppen Ia, IIa, IIb, IIIa, IVa und VIII des Periodensystems in Betracht, vorzugsweise Lithium, Natrium, Kalium, Magnesium, Calcium, Zink, Zinn, Eisen, Kobalt und Aluminium.

Von Interesse ist das Verfahren, worin n Mole eines Phosphonsäureesters der Formel 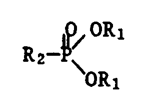
in welcher R₂ C₁-C₄-Alkoxy und R₁ C₁-C₄-Alkyl bedeuten und ein Mol eines Metalles Xⁿ der Gruppen Ia und IIa verwendet werden.

Von ganz besonderem Interesse ist das Verfahren, worin n Mole eines Phosphonsäureesters der Formel 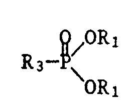
in welcher R₃ C₁-C₁₀-Alkyl und R₁ C₁-C₄-Alkyl bedeuten und ein Mol eines Metalles Xⁿ der Gruppen Ia, IIa, IIb, IIIa, IVa und VIII verwendet werden.

Die Umsetzung erfolgt nach dem Schema 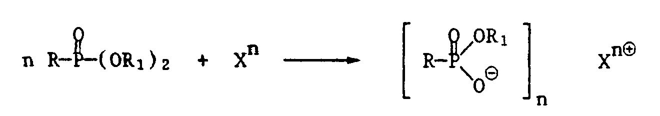
wobei als Abgangsprodukte je nach Phosphat bzw. Phosphonat Kohlenmonoxid, Methan, Ethylen, Ethan und niedere Dialkylether entstehen. Alle diese gasförmigen Verbindungen können umweltfreundlich verbrannt oder oxydiert werden, was gegenüber der Umsetzung gemäss der Ep-Patentanmeldung Nr. 0 245 207, bei welcher stets ein Alkylchlorid gebildet wird, das entweder verbrannt (mit daran folgender Chlorwasserstoffbildung) oder kondensiert werden muss, ökologisch fortschrittlich ist.

Die erfindungsgemässe Umsetzung verläuft teilweise exotherm, so dass für geeignete Kühlung gesorgt werden muss. Dies kann auch dadurch geschehen, dass man die Umsetzung in einem Ueberschuss an umzusetzendem Phosphonat vornimmt.

Das erfindungsgemäss herstellbare Lithiumsalz ist neu und stellt einen weiteren Gegenstand der vorliegenden Erfindung dar.

Bei den Alkalimetallen verläuft die Umsetzung in viel kürzerer Zeit als bei den anderen Metallen. Die Umsetzungszeit schwankt somit in weiten Grenzen. Sie kann z.B. von einigen Minuten bis einigen Tagen, insbesondere 30 Minuten bis 5 Tagen, z.B. 30 Minuten bis 3 Tagen dauern.

Die erfindungsgemäss herstellbaren Metallsalze der Formel (1) worin R C₁-C₄-Alkoxy und R₁ C₁-C₄-Alkyl bedeuten können als Düngemittel eingesetzt werden (vgl. z.B. DE-A-21 60 730).

Erfindungsgemäss herstellbare Metallsalze der Formel (1) worin R geradkettiges oder verzweigtes unsubstituiertes C₆-C₂₀-Alkyl und R₁ C₁-C₄-Alkyl bedeuten, sind als Emulgatoren für wässrige Kunststoffdispersionen (vgl. z.B. US-A-4,233,198) anwendbar und solche worin R und R₁ C₁-C₄-Alkyl bedeuten, können als Flammschutzmittel verwendet werden z.B. indem man sie mit dem zu schützenden Kunststoff mischt und bei Temperaturen von 200-420°C zu einer homogenen Masse schmilzt. Sie können aber auch zum flammfestmachen von Holz verwendet werden indem man das Holz mit einer diese Salze enthaltenden wässrigen oder organischen Lösung imprägniert.

In der US-A-4,251,492 sind erfindungsgemäss herstellbare Alkalimetallsalze der Formel (1) beschrieben, worin R C₁-C₇-Alkyl und R₁ Wasserstoff, Methyl oder Ethyl bedeuten. Diese Salze werden als Komplexbildner in Lösungen zur Entfernung von H₂S aus Gasen oder flüssigen Kohlenwasserstoffen verwendet.

Die nachfolgenden Beispiele erläutern das erfindungsgemässe Verfahren. Darin beziehen sich Prozentangaben, sofern nichts anderes angegeben, auf das Gewicht.

Beispiel 1: In 50 ml Methan-phosphonsäure-dimethylester (im folgenden mit DMMP abgekürzt) werden 0,35 g Lithium suspendiert und die Suspension innerhalb von 15 Minuten auf 125-130°C erwärmt. Bei dieser Temperatur entfernt man die Heizquelle und das Lithium geht unter Wärmeentwicklung und Temperaturanstieg auf 150-155°C in Lösung, wobei sich eine weisse Suspension bildet. Die Temperatur wird 30 Minuten lang auf 155°C gehalten und danach das überschüssige DMMP abdestilliert. Das ausgefallene Lithiumsalz wird mit 120 ml Aceton versetzt, filtriert, mit 50 ml Diethylether gewaschen und unter Vakuum bei 90°C getrocknet. Man erhält 5,4 g (93 % der Theorie) des Salzes der Formel 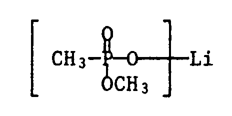
vom Smp. > 300°C.

Beispiel 2: Zu 300 ml DMMP, die auf 100°C erwärmt worden waren, gibt man unter Stickstoffatmosphäre 7,67 g Natrium hinzu. Nach beendeter Reaktion wird die dünnflüssige Suspension noch 30 Minuten lang bei 150°C gerührt und das überschüssige DMMP abdestilliert. Der kristalline Rückstand wird mit 100 ml Aceton versetzt, abfiltriert, und mit je 50 ml Aceton und Diethylether gewaschen. Man erhält 42,5 g (96,5 % der Theorie) des Salzes der Formel 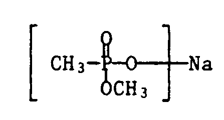
vom Smp. > 300°C.

Beispiel 3: Zu 300 ml DMMP, die auf 70°C erwärmt worden waren, gibt man portionenweise 13 g Kalium hinzu. Nach beendeter Zugabe rührt man noch 1 Stunde lang und destilliert dann das überschüssige DMMP ab. Der entstandene weisse kristalline Rückstand wird mit 100 ml Aceton verrührt, filtriert und mit 70 ml Aceton gewaschen. Man erhält 48,1 g (97,5 % der Theorie) des Salzes der Formel 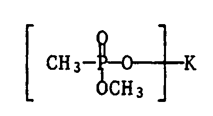
als hygroskopische Kristalle vom Smp. 211-213°C.

Beispiel 4: In 38 g Methan-phosphonsäure-diethylester werden, unter Rühren, 0,35 g Lithium suspendiert, wobei ohne zu erwärmen Reaktion eintritt und die Temperatur auf 120°C ansteigt. Man erhält eine Suspension die noch 30 Minuten lang auf 140°C erwärmt wird. Man lässt abkühlen und versetzt die Suspension mit 100 ml Aceton. Das ausgefallene Salz wird abfiltriert, mit je 50 ml Aceton und Diethylether gewaschen und getrocknet. Man erhält 5,8 g (89 % der Theorie) des Salzes der Formel 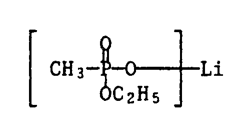
vom Smp. > 350°C.

Beispiel 5: In 83 g Ethan-phosphonsäure-diethylester werden, unter Rühren, 0,7 g Lithium suspendiert, wobei ohne zu erwärmen Reaktion eintritt und die Temperatur auf 120°C ansteigt. Die erhaltene Suspension wird noch 30 Minuten lang auf 140°C erwärmt. Nach dem Abkühlen versetzt man die Suspension mit 100 ml Aceton. Das ausgefallene Salz wird abfiltriert, mit je 50 ml Aceton und Diethylether gewaschen und getrocknet. Man erhält 13,15 g (91 % der Theorie) des Salzes der Formel 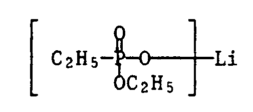
vom Smp. > 300°C.

Beispiel 6: 24,3 g Magnesiumspäne werden in 600 ml DMMP unter Rühren zum Sieden erhitzt. Sobald die Reaktion des Metalls mit dem DMMP beginnt, entfernt man die Heizquelle und die Reaktion schreitet von selbst fort. Sobald die Heftigkeit der Reaktion nachlässt (ca. 20-30 Minuten), erhitzt man noch 1,5 Stunden lang. Beim Abkühlen trennt sich die Lösung in zwei Schichten. Man saugt die obere Phase ab und verrührt die untere viskose Phase, mit 250 ml Aceton. Dann rührt man 12 Stunden lang, um durch eine langsame Kristallisation ein gut filtrierbares, körniges Produkt zu erhalten. Die Kristalle werden mit 500 ml Aceton 2 Stunden lang gerührt, abfiltriert und mit je 150 ml Aceton und Diethylether gewaschen. Man erhält 230 g (95 % der Theorie) des Salzes der Formel 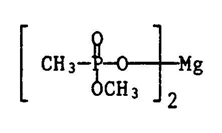
als weisse Kristalle vom Smp. 127°C.

Beispiel 7: 2,43 g Magnesium werden in 76 g Methan-phosphonsäure-diethylester suspendiert und das Ganze auf 180°C erhitzt, worauf Reaktion eintritt. Nach 1 Stunde erhält man eine zähe Lösung, die noch heiss ausgegossen und mit 200 ml Aceton gerührt wird. Der viskose Rückstand wird dann im Vakuum bei 110°C eingedampft. Man erhält 26,1 g eines glasigen Rückstandes der Formel

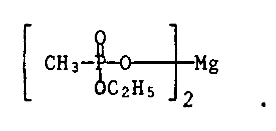

Beispiel 8: 20 g Calcium werden in 500 ml DMMP suspendiert und zum Rückfluss erhitzt. Bei 170°C setzt die Reaktion unter Gasentwicklung ein. Nach 70 Stunden erhält man eine klare Lösung, die am rotierenden Verdampfer soweit eingeengt wird, bis man 200 ml eines viskosen Rückstandes erhält. Dieser Rückstand wird mit 300 ml Aceton verrührt und nach 30 Minuten erhält man eine kristalline Masse, die filtriert und mit je 200 ml Aceton und Diethylether gewaschen wird. Man erhält nach dem Trocknen 130,5 g (100 % der Theorie) des Salzes der Formel 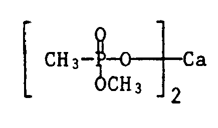
vom Smp. > 300°C.

Beispiel 9: Man verfährt wie im Beispiel 8 beschrieben, verwendet jedoch 4,0 g Calcium und 76 g Methan-phosphonsäure-diethylester. Man erhält 28 g (99 % der Theorie) des Salzes der Formel 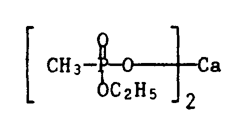
vom Smp. > 300°C (Zers.)

Beispiel 10: 5 g Kobaltpulver werden in 120 ml DMMP 4 Tage lang zum Sieden erhitzt. Dann wird die blaue Lösung heiss vom ungelösten Metall abfiltriert. Beim Abkühlen des Filtrates erhält man blaue Kristalle, die nach 24 Stunden abfiltriert und mit Diethylether gewaschen werden. Man erhält nach dem Trocknen 1,93 g (8 % der Theorie) des Salzes der Formel 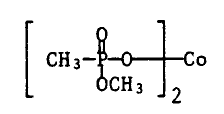
vom Smp. 133-136°C.

Beispiel 11: 25 g Eisenpulver werden während 3 Tagen in 500 ml DMMP unter Rühren zum Sieden erhitzt. Danach wird die Lösung unter Stickstoff vom ungelösten Eisen abfiltriert (21,6 g) und im Vakuum bei 15,6 mbar zur Trockene eingedampft. Der Rückstand wird in 200 ml Aceton aufgenommen. Der ausgefallene weisse Niederschlag wird abfiltriert und getrocknet. Man erhält 16,0 g (78 % bez. auf das verbrauchte Eisen) des Salzes der Formel 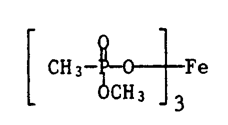
vom Smp. > 300°C (Zers.).

Beispiel 12: 5 g Zinnpulver werden während 3 Tagen in 100 ml DMMP unter Rühren zum Rückfluss erhitzt. Danach wird die Lösung heiss filtriert und am rotierenden Verdampfer (90°C/13 mbar) eingedampft. Man erhält ein zähes Oel, das beim Erkalten kristallisiert. Der kristalline Rückstand wird mit 30 ml Aceton gewaschen und getrocknet. Man erhält 12,5 g (89 % der Theorie) des Salzes der Formel 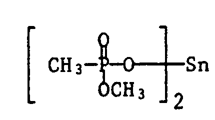
als weisses Pulver vom Smp. > 300°C.

Beispiel 13: 1,08 g Aluminiumfolie werden unter Rühren in 50 ml DMMP in Gegenwart von 10 mg Magnesium zum kräftigen Rückfluss erhitzt. Nach je 1,5, 6 und 24 Stunden werden jeweils weitere 10 mg Magnesium hinzugegeben. Die totale Rückflusszeit beträgt 48 Stunden. Dann wird die weisse Suspension zur Trockne eingedampft. Der Rückstand wird nacheinander mit 100 ml Methanol und 100 ml Wasser versetzt und anschliessend 20 Minuten gerührt. Der Niederschlag wird abfiltriert und auf dem Filter nacheinander mit Wasser (10 ml) und Methanol (10 ml) gewaschen und anschliessend im Vakuum bei 120°C getrocknet. Man erhält 13,4 g (94 % der Theorie) des Salzes der Formel 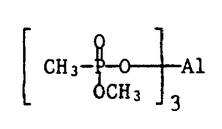
vom Smp. > 300°C.

Beispiel 14: Zu 112 g Trimethylphosphat gibt man unter Stickstoffatmosphäre 0,7 g Lithium. Dann erwärmt man innerhalb 30 Minuten auf 180°C und hält diese Temperatur für weitere zwei Stunden aufrecht. Die klare Lösung wird am rotierenden Verdampfer bei 18,2 mbar und einer Badtemperatur von 90°C zur Trockene eingedampft. Der weisse Rückstand wird in 80 ml Aceton eine Stunde lang gerührt und dann über eine Glasfilternutsche abfiltriert. Der Filterrückstand wird zunächst mit 30 ml Aceton, anschliessend mit 50 ml Diethylether gewaschen und danach im Vakuum bei 90°C getrocknet. Man erhält 11,5 g (87 % der Theorie) des Salzes der Formel 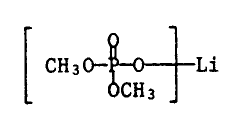
als weisse Kristalle vom Smp. > 300°C.

Beispiel 15: Zu 112 g Trimethylphosphat, die auf 120°C vorgewärmt waren, gibt man, unter Stickstoffatmosphäre, in kleinen Anteilen innerhalb 5 Minuten 2,3 g Natrium. Die Temperatur steigt langsam auf 160°C an. Dann wird die Suspension zwei Stunden lang bei 200°C gerührt und anschliessend die klare farblose Lösung am rotierenden Verdampfer unter vermindertem Druck (18,2 mbar) bei einer Badtemperatur von 90°C zur Trockene eingedampft. Der weisse Rückstand wird in 80 ml Aceton 15 Minuten lang gerührt und dann über eine Glasfilternutsche abfiltriert. Der Filterrückstand wird zunächst mit 30 ml Aceton, dann mit 50 ml Diethylether gewaschen und anschliessend im Vakuum bei 90°C getrocknet. Man erhält 13,9 g (100 % der Theorie) des Salzes der Formel 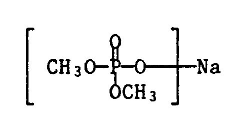
als weisse Kristalle vom Smp. 242-243°C.

Beispiel 16: Zu 112 g Trimethylphosphat, die auf 100°C vorgewärmt waren, gibt man, unter Stickstoffatmosphäre, in kleinen Anteilen innerhalb von 25 Minuten insgesamt 3,9 g Kalium. Dann wird die Suspension bei 170°-180°C 2 Stunden lang gerührt. Die klare, farblose Lösung wird am rotierenden Verdampfer unter vermindertem Druck (18,2 mbar) bei 90°C Badtemperatur zur Trockene eingedampft. Der weisse, kristalline Rückstand wird in 80 ml Aceton 15 Minuten lang gerührt und dann über eine Glasfilternutsche abfiltriert. Der Filterrückstand wird zunächst mit 30 ml Aceton und dann mit 50 ml Diethylether gewaschen und im Vakuum bei 90°C getrocknet. Man erhält 48,1 g (97,5 % der Theorie) des Salzes der Formel 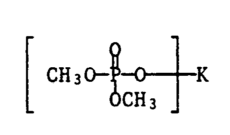
als sehr hygroskipische Kristalle vom Smp. 166-168°C.

Beispiel 17: Schindeln aus Abachi-Holz von 115 mm Länge, 20 mm Breite und 3 mm Dicke werden bei einem Flottenverhältnis von 1:5 (Holzgewicht:Flottengewicht) 60 Minuten lang in eine 7,5 Gew.-%ige wässrige Lösung der Verbindung 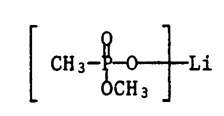
bei 20°C eingetaucht.

Nach der Imprägnierung werden die Schindeln 16 Stunden lang durch Aufhängen an der Luft getrocknet und auf dem Flammschutzeffekt geprüft, indem man sie in einem Brennkasten gemäss DIN-Test 53906 senkrecht befestigt, während 3 und 6 Sekunden anzündet und die Weiterbrennzeit in Sekunden misst.

Als Vergleich dient ein gleichzeitig durchgeführter Versuch mit einer 90°C heissen Flotte, welche aber keine Verbindung der oben angegebenen Formel enthält (Tauchzeit 30 Minuten). Der Prozentgehalt an der zu untersuchenden Verbindung wird aus der Flottenaufnahme berechnet.

Die Ergebnisse sind in der nachstehenden Tabelle I zusammengefasst.

**Tabelle I**

| Flottenkonzentration | Flottentemp. | Imprägnierzeit in Minuten | Flottenaufnahme | % Gehalt an Wirksubstanz | Flammschutzeffekt | |
|---|---|---|---|---|---|---|
| | | | | | Zündzeit | |
| | | | | | 3 sec | 6 sec |
| 0 % | 90°C | 30 | 71 % | -- | brennt | brennt |
| 7,5 % | 20°C | 60 | 47 % | 3,5 % | 0 sec | 0 sec |

Beispiel 18: Man verfährt wie in Beispiel 17 beschrieben, imprägniert jedoch 30 Minuten lang mit einer 90°C heissen Flotte.

Die Ergebnisse sind in der nachstehenden Tabelle II zusammengefasst.

**Tabelle II**

| Flottenkonzentration | Flottentemp. | Imprägnierzeit in Minuten | Flottenaufnahme | % Gehalt an Wirksubstanz | Flammschutzeffekt | |
|---|---|---|---|---|---|---|
| | | | | | Zündzeit | |
| | | | | | 3 sec | 6 sec |
| 0 % | 90°C | 30 | 71 % | -- | brennt | brennt |
| 7,5 % | 90°C | 30 | 71 % | 5,3 % | 0 sec | 0 sec |

## Patentansprüche

1. Verfahren zur Herstellung von Metallsalzen von Phosphor- und Phosphonsäureestern der Formel 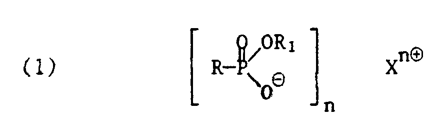 worin
R C₁-C₄-Alkoxy, geradkettiges oder verzweigtes unsubstituiertes C₁-C₂₀-Alkyl oder C₂-C₆-Alkenyl,
R₁ Wasserstoff oder C₁-C₄-Alkyl,
X ein Metallkation und
n eine der Wertigkeit von X entsprechende ganze Zahl von 1 bis 3
bedeuten, dadurch gekennzeichnet, dass man n Mole einer Phosphor- oder Phosphonsäure oder eines Esters davon der Formel 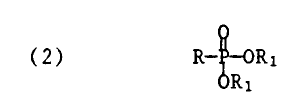 worin R, R₁ und n die oben angegebene Bedeutung haben, mit einem Mol eines Metalles Xⁿ gegebenenfalls unter Kühlung umsetzt.

2. Verfahren gemäss Anspruch 1, worin X das Kation eines Metalles der Gruppen Ia, IIa, IIb, IIIa, IVa und VIII des Periodensystems bedeutet.

3. Verfahren gemäss Anspruch 2, worin X das Lithium-, Natrium-, Kalium-, Magnesium-, Calcium-, Zink-, Zinn-, Eisen-, Kobalt- oder Aluminiumkation bedeutet.

4. Verfahren gemäss Anspruch 3, dadurch gekennzeichnet, dass man die Umsetzung bei einer Temperatur zwischen 20 und 200°C, vorzugsweise 25 und 180°C vornimmt.

5. Verfahren gemäss Anspruch 2, worin n Mole eines Phosphorsäureesters der Formel 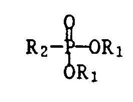 worin
R₂ C₁-C₄-Alkoxy und R₁ C₁-C₄-Alkyl bedeuten und ein Mol eines Metalles Xⁿ der Gruppen Ia und IIa verwendet werden.

6. Verfahren gemäss Anspruch 2, worin n Mole eines Phosphonsäureesters der Formel 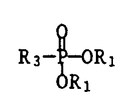 worin
R₃ C₁-C₁₀-Alkyl und R₁ C₁-C₄-Alkyl bedeuten und ein Mol eines Metalles Xⁿ der Gruppen Ia, IIa, IIb, IIIa, IVa und VIII verwendet werden.

## Claims

1. A process for the preparation of a metal salt of a phosphoric or phosphonic acid ester of formula 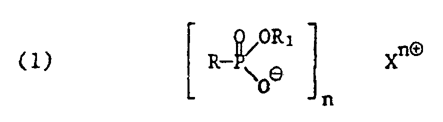 in which
R is C₁-C₄alkoxy or straight-chain or branched unsubstituted C₁-C₂₀alkyl or C₂-C₆alkenyl,
R₁ is hydrogen or C₁-C₄alkyl,
X is a metal cation, and
n is an integer from 1 to 3 corresponding to the valence of X,
which process comprises reacting n moles of a phosphoric or phosphonic acid or an ester thereof, of formula 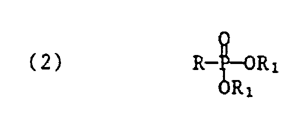 in which R, R₁ and n are as defined above, with one mole of a metal Xⁿ, if desired with cooling.

2. A process according to claim 1, in which X is the cation of a metal of groups Ia, IIa, IIb, IIIa, IVa and VIII of the Periodic Table.

3. A process according to claim 2, in which X is the cation of lithium, sodium, potassium, magnesium, calcium, zinc, tin, iron, cobalt or aluminium.

4. A process according to claim 3, wherein the reaction is carried out in the temperature range from 20 to 200°C, preferably from 25 to 180°C.

5. A process according to claim 2, in which n moles of a phosphoric acid ester of formula 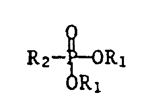 in which R₂ is C₁-C₄alkoxy and R₁ is C₁-C₄alkyl, and one mole of a metal Xⁿ of groups Ia and IIa are used.

6. A process according to claim 2, in which n moles of a phosphonic acid ester of formula 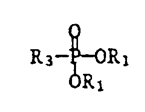 in which R₃ is C₁-C₁₀alkyl and R₁ is C₁-C₄alkyl, and one mole of a metal Xⁿ of groups Ia, IIa, IIb, IIIa, IVa and VIII are used.

## Revendications

1. Procédé de préparation de sels métalliques d'esters d'acide phosphorique ou d'acide phosphonique, de formule 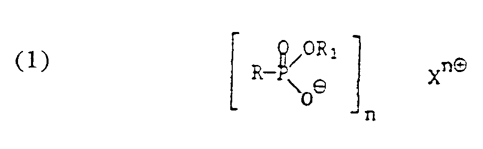 dans laquelle
R représente un groupe alkoxy en C₁₋₄, ou un groupe alkyle en C₁₋₂₀ ou alcényle en C₂₋₆ non-substitué, linéaire ou ramifié,
R₁ représente un atome d'hydrogène ou un groupe alkyle en C₁₋₄,
X représente un cation métallique, et
n représente un nombre entier valant de 1 à 3, correspondant à la valence de X,
caractérisé en ce que l'on fait réagir n moles d'acide phosphorique ou phosphonique ou d'un ester d'un tel acide, de formule 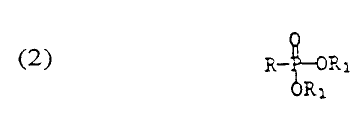 dans laquelle R, R₁ et n ont les significations indiquées ci-dessus, avec une mole d'un métal Xⁿ, avec refroidissement éventuel.

2. Procédé conforme à la revendication 1, dans lequel X représente un cation d'un métal appartenant à l'un des groupes Ia, IIa, IIb, IIIa, IVa et VIII de la Classification Périodique.

3. Procédé conforme à la revendication 2, dans lequel X représente un cation de lithium, sodium, potassium, magnésium, calcium, zinc, étain, fer, cobalt ou aluminium.

4. Procédé conforme à la revendication 3, caractérisé en ce que l'on effectue la réaction à une température située entre 20°C et 200°C, et de préférence entre 25°C et 180°C.

5. Procédé conforme à la revendication 2, dans lequel on emploie n moles d'un ester d'acide phosphorique de formule 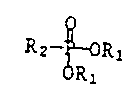 dans laquelle R₂ représente un groupe alkoxy en C₁₋₄ et R₁ représente un groupe alkyle en C₁₋₄,
et une mole d'un métal Xⁿ de l'un des groupes Ia et IIa.

6. Procédé conforme à la revendication 2, dans lequel on emploie n moles d'un ester d'acide phosphonique de formule 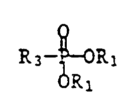 dans laquelle R₃ représente un groupe alkyle en C₁₋₁₀ et R₁ représente un groupe alkyle en C₁₋₄,
et une mole d'un métal Xⁿ de l'un des groupes Ia, IIa, IIb, IIIa, IVa et VIII.
